(19) Europäisches Patentamt / European Patent Office / Office européen des brevets

(11) EP 4 024 316 A1

(12) EUROPEAN PATENT APPLICATION

(43) Date of publication:
06.07.2022 Bulletin 2022/27

(21) Application number: 21207725.9

(22) Date of filing: 11.11.2021

(51) International Patent Classification (IPC):
G06Q 30/06 (2012.01)

(52) Cooperative Patent Classification (CPC):
G06Q 30/0631

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 05.01.2021 JP 2021000601

(71) Applicant: Fujitsu Limited
Kawasaki-shi, Kanagawa 211-8588 (JP)

(72) Inventor: Maeda, Wakana
Kawasaki-shi, Kanagawa, 211-8588 (JP)

(74) Representative: Hoffmann Eitle
Patent- und Rechtsanwälte PartmbB
Arabellastraße 30
81925 München (DE)

(54) INFORMATION PROCESSING PROGRAM, INFORMATION PROCESSING METHOD, AND INFORMATION PROCESSING DEVICE

(57) An information processing program that causes at least one computer to execute a process, the process includes acquiring ratings for a plurality of objects by each of a plurality of users; generating a user vector that represents a rating state of each of the users based on the ratings for the plurality of objects; generating neighborhood candidate users by excluding a user that has a user vector same as a user vector of a certain user from the plurality of users; selecting a certain number of neighborhood users from the neighborhood candidate users based on similarity of the user vector; and determining a recommended object based on the ratings of each of the neighborhood users.

FIG. 1

**Description**

FIELD

The embodiments discussed herein are related to an information processing program, an information processing method, and an information processing device.

BACKGROUND

The amount of information on the Web is increasing at a rapid rate, and it is difficult to quickly find the desired information from a huge amount of information. In view of the above, online shops and the like are increasingly introducing recommender systems that predict relevant items and provide information according to preferences of users. With a recommender system introduced, information users may be interested in is presented to improve user convenience, and online store operators are allowed to increase profits through advertising effects. As described above, the recommender system is a system advantageous to both users and operators. The recommender system is used, for example, in a shopping website, a product recommendation website for recommending products, such as movies and travel, and the like.

There are systems with various algorithms in the recommender systems, and much improvement and evaluation have been made. Generally, a recommender system grasps a preference of a user and makes recommendation according to the preference. Examples of an expression of the user's preference include rating of 0 and 1 obtained by item browsing, registration of information expressing support, purchasing, or the like, and N-grade rating obtained by being given rating such as one to five grades and selecting an appropriate grade from among them. A k-nearest neighbor (kNN) algorithm exists as one of the exemplary mechanisms of such a recommender system.

Here, an exemplary recommendation algorithm based on kNN will be described. In a recommender system using the kNN algorithm, a user to which recommendation is presented is set as an active user. Next, the recommender system uses the item ratings of the user as a user vector. The item ratings are generated from a rating value of each item by the user. A rating value for an unrated item is set to zero. Here, in the recommender system, a parameter representing the number of neighbors, which is the number of users to be referred to for recommendation generation, is set to k, and a parameter representing the number of items to be recommended is set to N. Then, the recommender system performs a neighborhood search to search for k users similar to the active user. Specifically, for example, the recommender system measures similarity to the active user for each user, and sets the top k people in the similarity as a neighborhood. Next, the recommender system determines N recommended items using a rating matrix created from the item ratings of k neighborhood users, and generates a recommendation list. Thereafter, the recommender system presents the recommended items registered in the generated recommendation list to the user set as the active user.

Moreover, a procedure for determining a recommended item will be described in detail. The recommender system generates a user vector of the active user on the basis of rating of 0 and 1 for a plurality of items, for example. Each element of the user vector is represented by 0 or 1. Next, the recommender system obtains a user vector also for another user in a similar manner. Next, the recommender system calculates similarity between the another user and the active user. The similarity is expressed by, for example, the rate at which the same item is evaluated as favorable or the like. Then, the recommender system sorts other users in descending order of similarity, and sets the top k people as the neighborhood. Then, the recommender system sets an item unrated by the active user and rated by the neighborhood users as a recommended item.

However, in a recommender system using such a kNN algorithm, countermeasures against the threat of personal information leakage due to a kNN attack are needed. The kNN attack is technology to be described below.

A purpose of an attacker is to grasp unknown items evaluated by a target user. The attacker has the following ability. The attacker knows the parameter k of the recommender system. Furthermore, the attacker partially knows the item ratings of the target user to be attacked by collecting information from posting or the like of the target user such as a social network system (SNS).

Then, an attack using the algorithm of the kNN attack is made on the recommender system by the following processing. The attacker registers k attack users called Sybil in the recommender system. At this time, the attacker generates item ratings of each attack user using known item ratings of the target user. The k attack users have the same or roughly the same item ratings. Next, the attacker obtains information associated with the recommended item recommended by the recommender system for any of the attack users. Then, the attacker assumes that the recommended item having been recommended is an item evaluated by the target user.

The acquisition of the information associated with the recommended item will be described in more detail. Upon reception of a recommendation request for a certain attack user, the recommender system performs a neighborhood search for the specified attack user. In this case, the item ratings of the specified attack user is the same or roughly the same as the item ratings of other attack users, and item ratings are roughly the same except for unknown items evaluated by the target user. Therefore, the recommender system obtains a neighborhood including other attack users and the target user as a neighborhood for the specified attack user. Then, the recommender system sets an item unrated by the specified attack user, who is an active user, and rated in the neighborhood as a recommended item. For example, this recommended item is an item unrated by the attack user and rated by the target user.

Some techniques have been proposed as countermeasures against such a kNN attack. For example, there has been a conventional technique in which $\beta$ divisions of top k people in the similarity are created and a neighborhood is selected by sampling from each division. Furthermore, there has been a conventional technique in which similarity to the active user is measured for each user and sets the top k people in the similarity as a neighborhood while making correction using a function such that the similarity increases in a case where the similarity is less than a threshold value. Furthermore, as a technique in a recommender system, there has been a conventional technique for reducing the influence of a fake user by calculating similarity using a similarity scale that suppresses appearance of the fake user designed to have an average preference as a hub user with high similarity to any user.

Japanese Laid-open Patent Publication No. 2017-27480, Lu Zhigang, and Shen Hong, "A security-assured accuracy-maximized privacy preserving collaborative filtering recommendation algorithm" Proceedings of the 19th International Database Engineering & Applications Symposium, 2015, and Boutet Antoine, et al., "Collaborative Filtering Under a Sybil Attack: Similarity Metrics do Matter!" 2018 48th AnnualIEEE/IFIP International Conference on Dependable Systems and Networks (DSN), IEEE, 2018 are disclosed as related art.

SUMMARY

[TECHNICAL PROBLEM]

However, in the case of the technique of creating $\beta$ divisions of top k people in the similarity and selecting the neighborhood, there is a risk of being attacked if $\beta \times k$ attack users are created. Furthermore, according to this technique, the neighborhood includes users with low similarity with certainty, whereby the recommendation accuracy may be lowered. Meanwhile, in the case of using the conventional technique of correcting the similarity, there is a risk of being attacked if an attack user is created in such a manner that a user vector is the same as that of the active user. Furthermore, according to this technique, the neighborhood includes users who are not originally similar due to the similarity correction, whereby the recommendation accuracy may be lowered. Moreover, according to the technique of calculating similarity using a similarity scale for not recognizing a fake user as a hub user, it is difficult to take countermeasures against a kNN attack.

The disclosed technology has been conceived in view of the above, and an object thereof is to provide an information processing program, an information processing method, and an information processing device that improve safety while maintaining recommendation quality.

[SOLUTION TO PROBLEM]

According to an aspect of the embodiments, an information processing program that causes at least one computer to execute a process, the process includes acquiring ratings for a plurality of objects by each of a plurality of users; generating a user vector that represents a rating state of each of the users based on the ratings for the plurality of objects; generating neighborhood candidate users by excluding a user that has a user vector same as a user vector of a certain user from the plurality of users; selecting a certain number of neighborhood users from the neighborhood candidate users based on similarity of the user vector; and determining a recommended object based on the ratings of each of the neighborhood users.

[ADVANTAGEOUS EFFECTS OF INVENTION]

In one aspect, the embodiments may improve safety while maintaining recommendation quality.

BRIEF DESCRIPTION OF DRAWINGS

FIG. 1 is a block diagram of a recommender system according to a first embodiment;
FIG. 2 is a diagram for explaining a rating matrix retained by a data management unit;
FIG. 3 is a diagram for explaining a process of selecting neighborhood users in the case of processing of the recommender system in a normal time in the first embodiment;
FIG. 4 is a diagram for explaining a process of selecting neighborhood users in the case of using attack users having the same user vector;
FIG. 5 is a diagram for explaining a process of selecting a neighborhood user in the case of using attack users having different user vectors in a state where known information is insufficient;
FIG. 6 is a diagram illustrating an outline of a defensive function of the recommender system according to the first embodiment;
FIG. 7 is a flowchart of a recommended item determination process by the recommender system according to the first embodiment;
FIG. 8 is a block diagram of a recommender system according to a second embodiment;
FIG. 9 is a diagram illustrating exemplary neighborhood-planned users before summarization at a normal time;
FIG. 10 is a diagram illustrating exemplary neighborhood-planned users in which summarization at a normal time is performed;

FIG. 11 is a diagram illustrating exemplary neighborhood-planned users before summarization at the time of an attack;

FIG. 12 is a diagram illustrating exemplary neighborhood-planned users in which summarization at the time of an attack is performed;

FIG. 13 is a diagram illustrating an outline of a defensive function of the recommender system according to the second embodiment;

FIG. 14 is a flowchart of a recommended item determination process by the recommender system according to the second embodiment; and

FIG. 15 is a hardware configuration diagram of the recommender system.

DESCRIPTION OF EMBODIMENTS

Hereinafter, embodiments of an information processing program, an information processing method, and an information processing device disclosed in the present application will be described in detail on the basis of the accompanying drawings. Note that the following embodiments do not limit the information processing program, the information processing method, and the information processing device disclosed in the present application.

[First Embodiment]

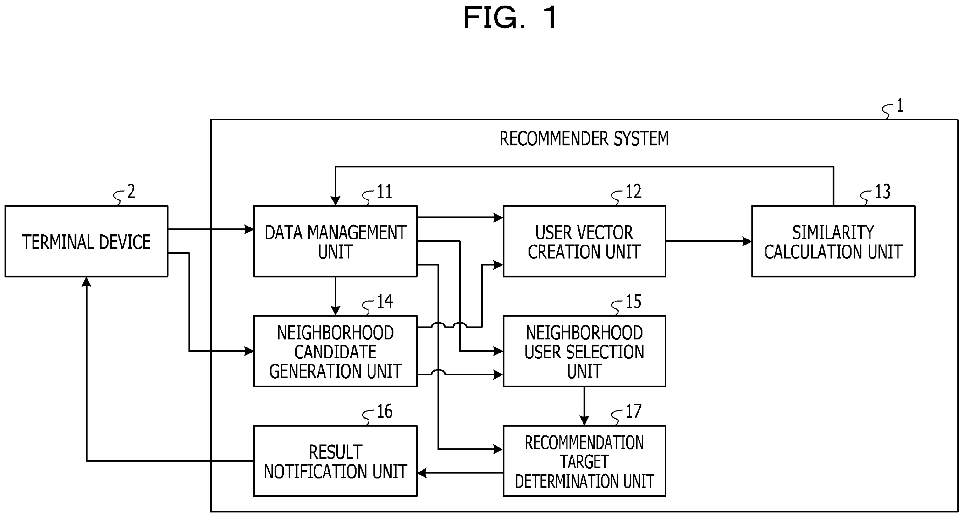

FIG. 1 is a block diagram of a recommender system according to a first embodiment. A recommender system 1 is connected to a large number of terminal devices 2 via the Internet or the like. The terminal device 2 is, for example, a terminal to be used by a user who, for example, purchases a product using an online store or the like. The terminal device 2 also includes a terminal to be used by an attacker to obtain information associated with a subject attack target user by performing a kNN attack on the recommender system 1.

The recommender system 1 is a system that recommends items to each user on the basis of information associated with user ratings for a plurality of items. As illustrated in FIG. 1, the recommender system 1 includes a data management unit 11, a user vector creation unit 12, a similarity calculation unit 13, a neighborhood candidate generation unit 14, a neighborhood user selection unit 15, a result notification unit 16, and a recommendation target determination unit 17.

The data management unit 11 includes a storage device such as a hard disk. The data management unit 11 obtains rating information of each user transmitted from the terminal device 2. Here, binary rating is used in which support is set to 1 and non-support is set to 0 as rating information of a user. For example, in a case where a user has purchased an item, the data management unit 11 obtains rating that the user supports the item, and obtains information that the user rating to the item is set to 1. Furthermore, in a case where another user has made an input to express support for an item, the data management unit 11 obtains rating that the user supports the item, and obtains information that the user rating to the item is set to 1. Furthermore, the data management unit 11 gives rating of 0 to items for which support or non-support is not expressed. Then, the data management unit 11 generates a rating matrix from the item ratings of each user for each item.

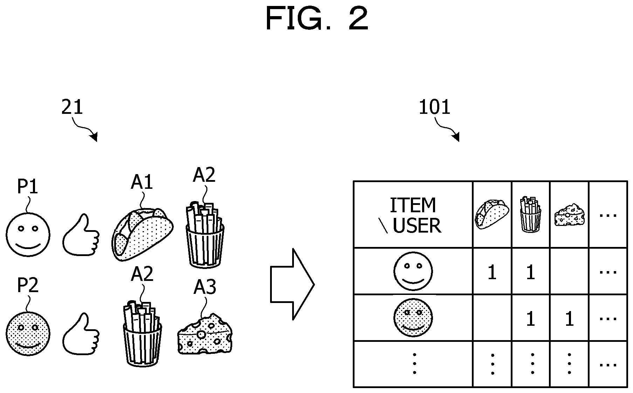

FIG. 2 is a diagram for explaining a rating matrix retained by the data management unit. An exemplary process of creating the rating matrix will be described with reference to FIG. 2. For example, the data management unit 11 obtains support information of a user P1 for items A1 and A2 by an input expressing support for the items A1 and A2 made by the user P1. Furthermore, the data management unit 11 obtains support information of a user P2 for items A2 and A3 by an input expressing support for the items A2 and A3 made by the user P2. Then, the data management unit 11 allocates one row for each of the users P1 and P2, and generates a rating matrix 101 in which the ratings on each item, including the items A1 to A3, is registered for each column. Furthermore, although not illustrated in FIG. 2, the data management unit 11 may describe the registration date and time of each user in the rating matrix.

Furthermore, at the time of recommending items, the data management unit 11 receives, from the similarity calculation unit 13, an input of similarity to an active user to be a target of item recommendation from the similarity calculation unit 13. Then, the data management unit 11 adds the similarity of each user to the rating matrix, and generates a rating matrix for recommendation.

At the time of executing item recommendation, the user vector creation unit 12 receives, from the neighborhood candidate generation unit 14, an input of a creation instruction of a user vector together with information associated with the active user. Next, the user vector creation unit 12 obtains the rating matrix from the data management unit 11. Then, the user vector creation unit 12 creates a user vector from the item ratings of each user registered in the rating matrix. In the present embodiment, the user vector creation unit 12 creates a user vector by arranging, in a row, the values of 0 and 1 arranged in the rating matrix as they are. Thereafter, the user vector creation unit 12 outputs, to the similarity calculation unit 13, information associated with the active user together with the created user vector of each user.

The similarity calculation unit 13 receives, from the user vector creation unit 12, the input of the information associated with the active user together with the user vector of each user. Then, the similarity calculation unit 13 compares the user vector of the active user with the user vectors of other users other than the active user, and calculates similarity of the other users to the active user. For example, Jacard similarity or the like may be used as the similarity. Then, the similarity calculation unit 13 outputs the calculated similarity of the other users to the data management unit 11.

The neighborhood candidate generation unit 14 receives a request for item recommendation in response to an input made from the terminal device 2. For example, in a case where a specific online store is accessed from the terminal device 2, the neighborhood candidate generation unit 14 receives an input of a request for item recommendation for items handled by the online store. In addition, the neighborhood candidate generation unit 14 may receive a request for item recommendation directly from the terminal device 2. Then, the neighborhood candidate generation unit 14 outputs, to the user vector creation unit 12, a creation instruction of a user vector together with the information associated with the active user.

Thereafter, the neighborhood candidate generation unit 14 obtains, from the data management unit 11, the rating matrix to be used for making recommendation to the active user. Next, the neighborhood candidate generation unit 14 identifies, as neighborhood candidate users, users with similarity to the active user less than a candidate threshold value determined in advance.

Next, the neighborhood candidate generation unit 14 determines whether or not there is a neighborhood candidate user having a user vector same as that of the active user among the neighborhood candidate users. In a case where there is a neighborhood candidate user having a user vector same as that of the active user, the neighborhood candidate generation unit 14 excludes that user from the neighborhood candidate users. Here, while other users having user vectors same as that of the active user are useful for a kNN attack, they are not useful for recommendation. Therefore, even in the case of excluding the user vector same as that of the active user from the neighborhood candidate users, the recommendation accuracy is not affected, and it is possible to improve a protective effect against the kNN attack. Thereafter, the neighborhood candidate generation unit 14 outputs the information associated with the neighborhood candidate users to the neighborhood user selection unit 15.

The neighborhood user selection unit 15 receives the input of the information associated with the neighborhood candidate users from the neighborhood candidate generation unit 14. Next, the neighborhood user selection unit 15 obtains the similarity of the neighborhood candidate users from the rating matrix retained by the data management unit 11 for making recommendation to the active user. Then, the neighborhood user selection unit 15 selects a neighborhood user included in the neighborhood with k people, which is a predetermined number of people from the top in descending order of similarity among the neighborhood candidate users, as the neighborhood. Thereafter, the neighborhood user selection unit 15 outputs the information associated with the neighborhood user to the recommendation target determination unit 17.

The recommendation target determination unit 17 receives the input of the neighborhood user from the neighborhood user selection unit 15. Next, the recommendation target determination unit 17 obtains the item ratings of the active user and the neighborhood user from the rating matrix retained by the data management unit 11. Then, the recommendation target determination unit 17 identifies items supported by the neighborhood user and not supported by the active user. Next, the recommendation target determination unit 17 determines, as recommended items, one or several items from the identified items. Thereafter, the recommendation target determination unit 17 outputs the information associated with the recommended items to the result notification unit 16.

The result notification unit 16 receives the input of the information associated with the recommended items from the recommendation target determination unit 17. Then, the result notification unit 16 transmits the information associated with the recommended items to the terminal device 2 to make notification of the recommendation result. Here, while the configuration of directly transmitting the information associated with the recommended items to the terminal device 2 has been described in the present embodiment, the information associated with the recommended items may be transmitted to an online site or the like. In that case, the online site that has obtained the information associated with the recommended items transmits a web page or the like created using the information to the terminal device 2, and displays it.

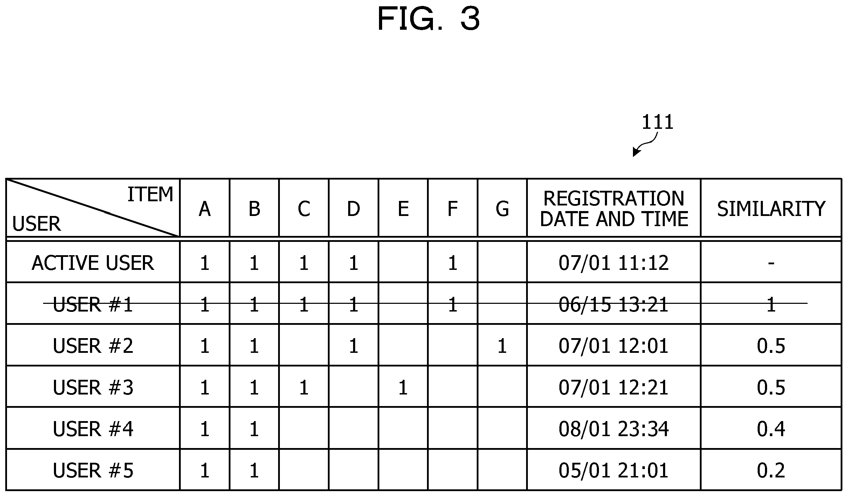

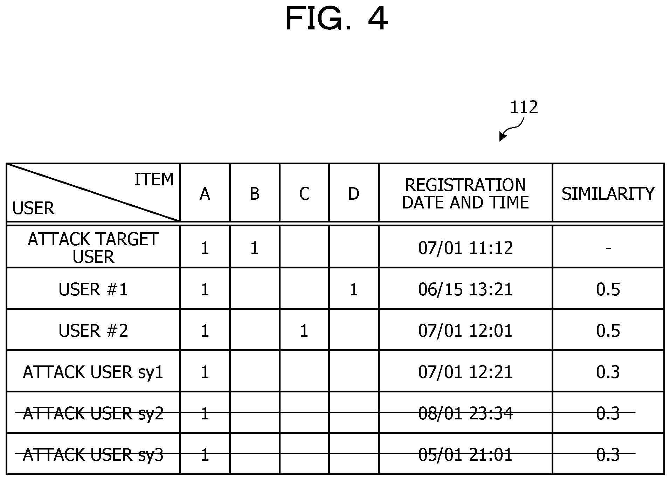

Next, a protective effect in the case of using the recommender system 1 according to the present embodiment will be described with reference to FIGs. 3 and 4. FIG. 3 is a diagram for explaining a process of selecting neighborhood users in the case of processing of the recommender system in a normal time in the first embodiment. FIG. 4 is a diagram for explaining a process of selecting neighborhood users in the case of using attack users having the same user vector.

A table 111 illustrated in FIG. 3 represents neighborhood candidate users before excluding a user having the same user vector. In the table 111, there are six users #1 to #5 in addition to the active user. Here, a case where the similarity of the users #1 to #5 is less than the candidate threshold value and they are regarded as neighborhood candidate users will be described. Furthermore, a case of selecting three people as the neighborhood will be described here.

The neighborhood candidate generation unit 14 excludes, from the neighborhood candidate users, the user #1 having the user vector same as that of the active user in the table 111. FIG. 3 illustrates that the user #1 is excluded by a strikethrough line. Next, the neighborhood user selection unit 15 selects, as neighborhood users, the top three people having a higher degree of similarity from the users #2 to #5, who are the neighborhood candidate users. In this case, the neighborhood user selection unit 15 selects the users #2, #3, and #4 as neighborhood users. Then, while the recommendation target determination unit 17 sets items E or G as a recommended item using the item ratings of the users #2, #3, and #4, the user #1 does not affect the determination of the recommended item, and thus the result is the same even if it is not excluded.

A table 112 illustrated in FIG. 4 also represents neighborhood candidate users before excluding a user having the same user vector. In the table 112, there are an attack target user, users #1 and #2, and attack users sy1 to sy3. The attack users sy1 to sy3 are users created by the attacker, and the attack user sy1 is an active user. In this case, the attack users sy1 to sy3 are created with the same user vector. Here, a case where the similarity of the attack target user, the users #1 and #2, and the attack users sy2 and sy3 is less than the candidate threshold value and they are regarded as neighborhood candidate users will be described. Furthermore, a case of selecting three people as the neighborhood will be described here as well.

The neighborhood candidate generation unit 14 excludes, from recommendation candidate users, the attack users sy2 and sy3 having user vectors same as that of the attack user sy1, which is the active user in the table 112. FIG. 4 illustrates that the attack users sy2 and sy3 are excluded by strikethrough lines. As a result, the neighborhood user selection unit 15 selects the users #1 and #2 as neighborhood users in addition to the attack target user. In this case, since the normal users #1 and #2 other than the attack target user are included in the neighborhood, it can be said that the creation of the ideal neighborhood for the attacker has been successfully blocked. Then, the recommendation target determination unit 17 sets any of items B, C, and D as a recommended item using the item ratings of the attack target user and the users #1 and #2. In this manner, an item supported by a user other than the attack target user is included in the items selected as recommended items, whereby it becomes difficult for the attacker to identify an unknown item supported by the subject attack target user.

Here, in the case of FIG. 4, a case where a plurality of attack users having the same user vector is created has been described. Moreover, unless known information associated with the item ratings of the attack target user is abundant, it is difficult to create attack users who are not the same due to lack of known information. In that case, in the case of the table 112 of FIG. 4, it becomes difficult to create users corresponding to the attack users sy2 and sy3, and it becomes difficult to attack the recommender system 1.

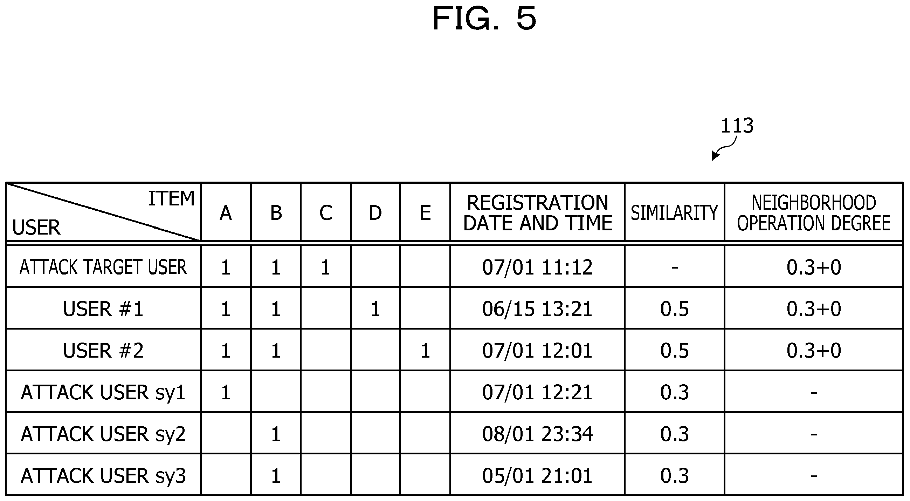

FIG. 5 is a diagram for explaining a process of selecting a neighborhood user in the case of using attack users having different user vectors in a state where known information is insufficient. Since the attacker has little known information associated with the attack target user, attack users sy1 to sy3 as illustrated in a table 113 are created. In this case, since there is no user having a user vector same as that of the attack user sy1, who is the active user, the neighborhood candidate generation unit 14 does not exclude a user from the recommendation candidate users. However, in a case where the neighborhood of the attack user sy1 is created, the neighborhood user selection unit 15 may create the neighborhood including the users #1 and #2 without creating the neighborhood including the attack target user reliably. Therefore, it can be said that the creation of the ideal neighborhood for the attacker has been successfully blocked. Then, the recommendation target determination unit 17 determines recommended items using the item ratings of either the attack target user, the user #1, or the user #2. In this manner, an item supported by a user other than the attack target user may be included in the items selected as recommended items, whereby it becomes difficult for the attacker to identify an unknown item supported by the subject attack target user.

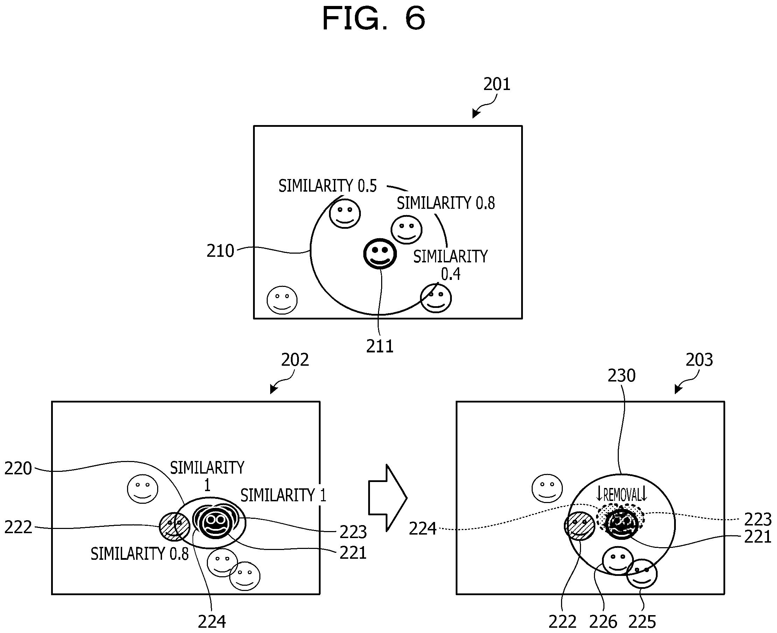

Moreover, an image of the defensive function of the recommender system 1 according to the first embodiment will be described with reference to FIG. 6. FIG. 6 is a diagram illustrating an outline of the defensive function of the recommender system according to the first embodiment. Here, a case of selecting three people as a neighborhood will be described.

For example, a state 201 represents a normal state in which no attack is made. In this case, the recommender system 1 determines a neighborhood 210 for an active user 211, and selects users with similarity of 0.8, 0.5, and 0.4 as neighborhood users. This also applies in a similar manner in a case where general neighborhood creation is performed.

Meanwhile, a state 202 represents a state in which an attack is being made and the general neighborhood creation is performed with an attack user 221 serving as an active user. In this case, a neighborhood 220 is created for the attack user 221. Here, the neighborhood 220 includes an attack target user 222 and attack users 223 and 224 having user vectors same as that of the attack target user 222, and thus it can be said that the neighborhood 220 is the ideal neighborhood for the attacker. Therefore, the attacker is enabled to identify an unknown item supported by the attack target user 222.

Meanwhile, a state 203 represents a case where an attack is being made and a neighborhood is created by the recommender system 1 according to the present embodiment with the attack user 221 serving as an active user. In this case, the recommender system 1 excludes, from the neighborhood candidate users, the attack users 223 and 224 having user vectors same as that of the attack user 221. Then, the recommender system 1 creates a neighborhood 230 for the attack user 221. Here, the neighborhood 230 includes users 225 and 226 in addition to the attack target user 222, and thus the neighborhood 230 is not the ideal neighborhood for the attacker. As a result, it becomes difficult for the attacker to identify an unknown item supported by the attack target user 222.

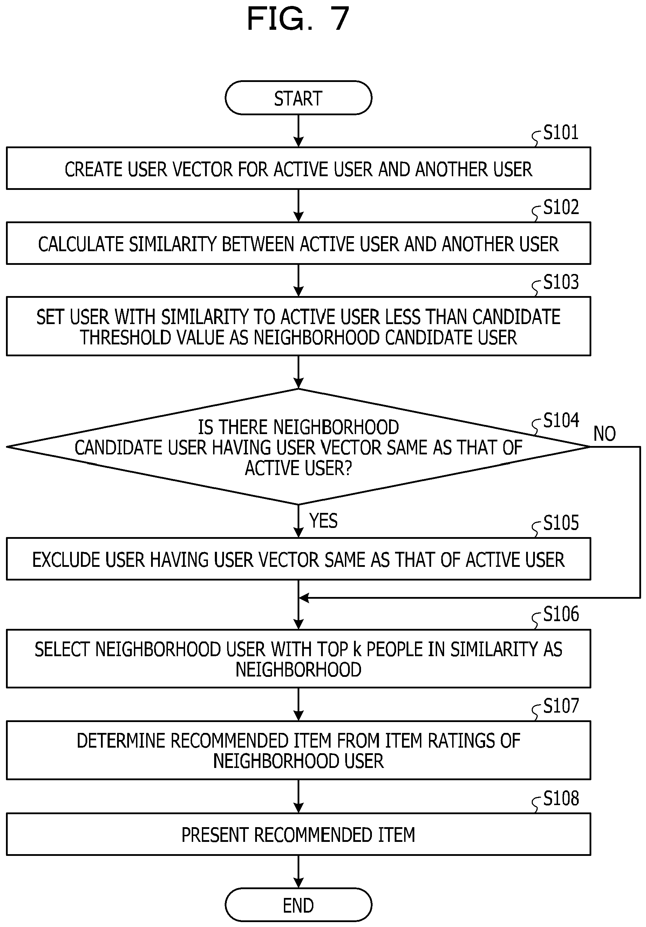

Next, a flow of the recommended item determination process by the recommender system 1 according to the present embodiment will be described with reference to FIG. 7. FIG. 7 is a flowchart of a recommended item determination process by the recommender system according to the first embodiment.

The data management unit 11 receives a rating result of each user using the terminal device 2, updates the item ratings as needed, and generates a rating matrix. The neighborhood candidate generation unit 14 receives a request for item recommendation directed to a specific user from the terminal device 2. Then, the neighborhood candidate generation unit 14 outputs, to the user vector creation unit 12, a creation instruction of a user vector together with information associated with the active user, who is the specific user. The user vector creation unit 12 obtains the rating matrix from the data management unit 11, and generates a user vector for each user (step S101).

The similarity calculation unit 13 obtains, from the user vector creation unit 12, information associated with the active user and the user vector of each user. Then, the similarity calculation unit 13 calculates similarity between the active user and another user using the user vectors of the active user and the another user (step S102). Thereafter, the similarity calculation unit 13 outputs the calculated similarity to the data management unit 11. The data management unit 11 adds the similarity of each user to the rating matrix.

The neighborhood candidate generation unit 14 obtains the rating matrix from the data management unit 11. Then, the neighborhood candidate generation unit 14 sets, as neighborhood candidate users, users with the similarity to the active user less than a candidate threshold value among the users registered in the rating matrix (step S103).

Next, the neighborhood candidate generation unit 14 determines whether or not there is a neighborhood candidate user having a user vector same as that of the active user (step S104). If there is no neighborhood candidate user having a user vector same as that of the active user (No in step S104), the recommended item determination process proceeds to step S106.

On the other hand, if there is a neighborhood candidate user having a user vector same as that of the active user (Yes in step S104), the neighborhood candidate generation unit 14 excludes the user having the user vector same as that of the active user from the neighborhood candidate users (step S105).

The neighborhood user selection unit 15 obtains information associated with the neighborhood candidate users from the neighborhood candidate generation unit 14. Then, the neighborhood user selection unit 15 selects, as the neighborhood candidate users, the users included in the neighborhood with the top k people in the similarity as the neighborhood (step S106).

The recommendation target determination unit 17 obtains information associated with the neighborhood candidate users from the neighborhood user selection unit 15. Then, the recommendation target determination unit 17 determines a recommended item from the item ratings of the neighborhood users (step S107).

The result notification unit 16 transmits the recommended item determined by the recommendation target determination unit 17 to the terminal device 2 to present the recommended item to a user (step S108).

As described above, the recommender system according to the present embodiment generates a neighborhood while excluding a user having a user vector same as that of an active user, and determines a recommended item on the basis of item ratings of a neighborhood user included in the neighborhood. As a result, in a case where a plurality of attack users having the same user vector is created, attack users other than the active user are excluded, whereby it becomes possible to block creation of an ideal neighborhood for an attacker. Therefore, it becomes possible to defend against a kNN attack. Furthermore, exclusion of the user having a user vector same as that of the active user does not affect determination of the recommended item, whereby it becomes possible to determine an appropriate recommended item. For example, it becomes possible to improve safety while maintaining recommendation quality.

[Second Embodiment]

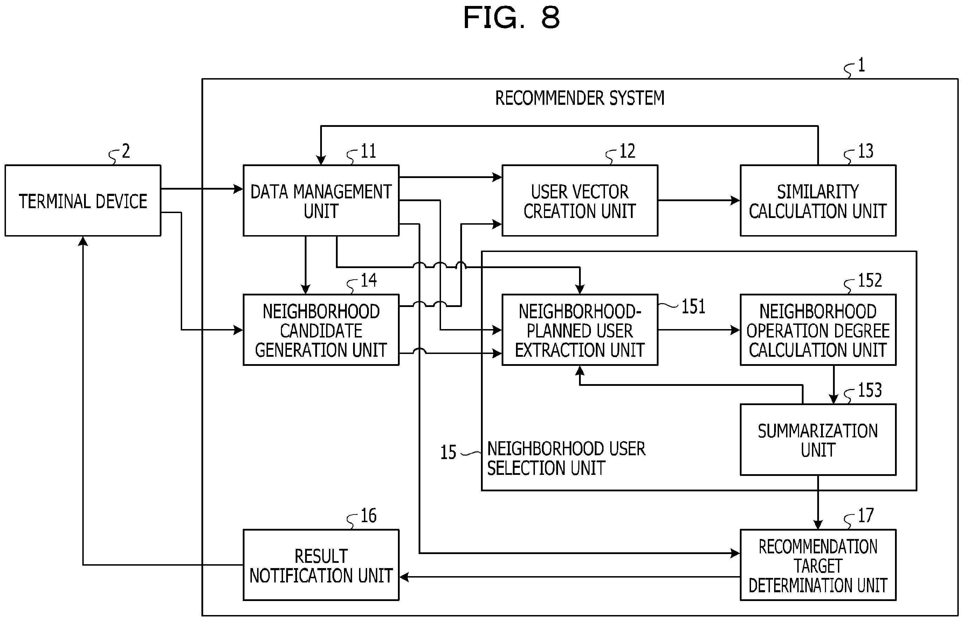

FIG. 8 is a block diagram of a recommender system according to a second embodiment. A recommender system 1 according to the present embodiment is different from the first embodiment in that other users are included in a neighborhood by summarizing and reducing users assumed to be attack users from a relationship with an active user. In the following description, descriptions of functions of respective units similar to those of the first embodiment are omitted.

A neighborhood user selection unit 15 according to the present embodiment calculates a neighborhood operation degree, which is information indicating a relationship with the active user, from similarity and a registration date and time, and summarizes the users with the neighborhood operation degree equal to or higher than a threshold value into a one person. Hereinafter, details of the neighborhood user selection unit 15 will be described. The neighborhood user selection unit 15 according to the present embodiment includes a neighborhood-planned user extraction unit 151, a neighborhood operation degree calculation unit 152, and a summarization unit 153.

The neighborhood-planned user extraction unit 151 receives an input of information associated with neighborhood candidate users from the neighborhood candidate generation unit 14. Furthermore, the neighborhood-planned user extraction unit 151 obtains a rating matrix from a data management unit 11. Here, in the present embodiment, the data management unit 11 registers a registration date and time in the rating matrix. Then, the neighborhood-planned user extraction unit 151 extracts, as neighborhood-planned users, users included in a neighborhood with the top k people in the similarity to the active user as the neighborhood. Thereafter, the neighborhood-planned user extraction unit 151 outputs, to the neighborhood operation degree calculation unit 152, information associated with the neighborhood-planned users together with the rating matrix.

Thereafter, in a case where summarization of the neighborhood-planned users to be described later is carried out, the neighborhood-planned user extraction unit 151 receives, from the summarization unit 153, an input of the number of neighborhood-planned users reduced by the summarization. Then, the neighborhood-planned user extraction unit 151 extracts the number of neighborhood-planned users reduced by the summarization of high-ranking similarity from the neighborhood candidate users excluding the users already extracted as the neighborhood-planned users, and adds it to the neighborhood-planned users. Thereafter, the neighborhood-planned user extraction unit 151 outputs, to the neighborhood operation degree calculation unit 152, information associated with the neighborhood-planned users to which the number of people is newly added together with the rating matrix.

The neighborhood operation degree calculation unit 152 receives, from the neighborhood-planned user extraction unit 151, the input of the information associated with the neighborhood-planned users and the rating matrix. Next, the neighborhood operation degree calculation unit 152 calculates a neighborhood operation degree, which is information indicating a relationship with the active user for each neighborhood-planned user. For example, the neighborhood operation degree calculation unit 152 according to the present embodiment obtains a neighborhood operation degree by adding, to the similarity, a value of a function f(x) representing a difference in registration date and time expressed by the following formula (1). Thereafter, the neighborhood operation degree calculation unit 152 outputs, to the summarization unit 153, the information associated with the neighborhood-planned users and the calculated neighborhood operation degree of each neighborhood-planned user.
[Formula 1]

$$f(x) = 1 - \left| \frac{-2}{1 + e^x} + 1 \right| \quad \cdots (1)$$

Here, x represents a time difference between the registration date and time of the target neighborhood-planned user and the registration date and time of the active user. However, another type of information may be used as the neighborhood operation degree as long as it is information indicating a relationship with the active user or other neighborhood candidate users. For example, the neighborhood operation degree calculation unit 152 may use the similarity between user vectors of neighborhood-planned users or the like.

The summarization unit 153 receives, from the neighborhood operation degree calculation unit 152, the input of the information associated with the neighborhood-planned users and the neighborhood operation degree of each neighborhood-planned user. Then, the summarization unit 153 determines whether or not there is a plurality of neighborhood-planned users with the neighborhood operation degree equal to or higher than a summarization threshold value determined in advance.

In a case where there is a plurality of neighborhood-planned users with the neighborhood operation degree equal to or higher than the summarization threshold value determined in advance, the summarization unit 153 summarizes them into one person as a summarized user. For example, the summarization unit 153 creates a summarized user who supports all the items supported by the respective neighborhood-planned users to be summarized. As a result, information associated with the items supported by the summarized users remains, whereby it becomes possible to obtain a recommendation result same as that in the case of not performing the summarization processing. Thereafter, the summarization unit 153 outputs, to the neighborhood-planned user extraction unit 151, a value obtained by subtracting 1 from the number of neighborhood-planned users reduced by the summarization, which is, the number of neighborhood-planned users having been subject to the summarization.

Meanwhile, in a case where there is one or less neighborhood-planned user with the neighborhood operation degree equal to or higher than the summarization threshold value determined in advance, the summarization unit 153 selects the neighborhood user at that time as a neighborhood user. The neighborhood user at this time includes the summarized user if the neighborhood-planned users are summarized. Thereafter, the summarization unit 153 outputs the information associated with the determined neighborhood-planned user to the recommendation target determination unit 17. Furthermore, if there is a summarized user, the summarization unit 153 also outputs the information associated with the item ratings of the created summarized user to the recommendation target determination unit 17.

In a case where the neighborhood-planned users are summarized, the recommendation target determination unit 17 obtains, from the summarization unit 153, the information associated with the neighborhood user including the summarized user together with the information associated with the item ratings. Then, the recommendation target determination unit 17 obtains, from the data management unit 11, the item ratings of the neighborhood users other than the summarized user, and determines a recommended item using the item ratings of each neighborhood user.

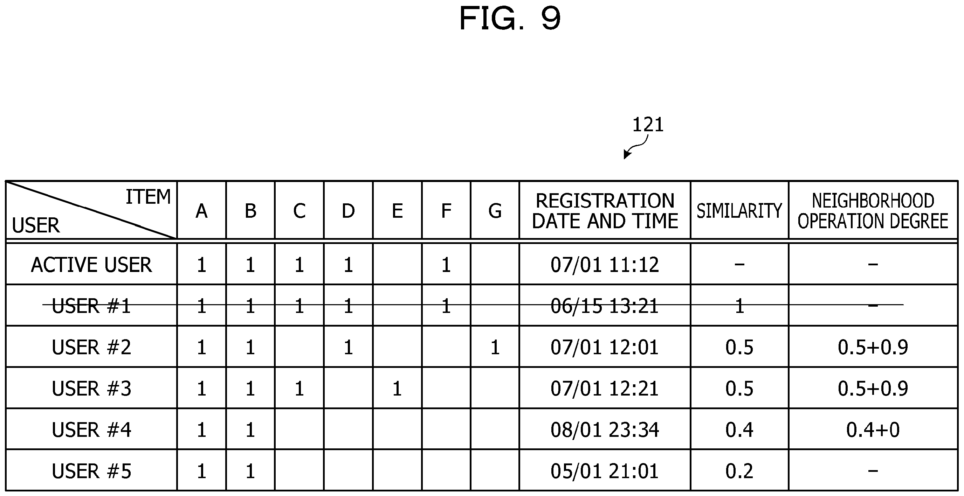

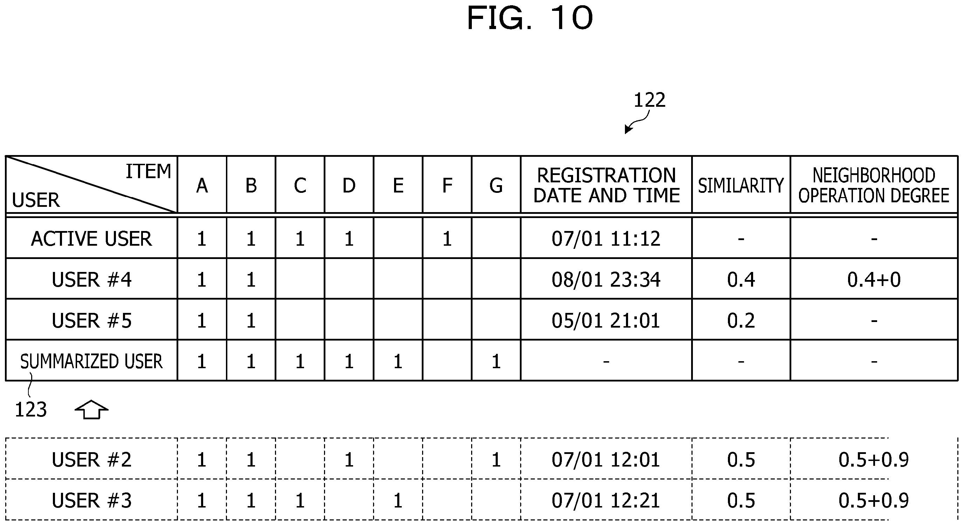

Next, an operation of a neighborhood selection process in a normal time in the case of using the recommender system 1 according to the present embodiment will be described with reference to FIGs. 9 and 10. FIG. 9 is a diagram illustrating exemplary neighborhood-planned users before summarization at a normal time. Furthermore, FIG. 10 is a diagram illustrating exemplary neighborhood-planned users in which summarization at a normal time is performed.

In a table 121 illustrated in FIG. 9, there are five users #1 to #5 in addition to an active user. Here, a case where the similarity of the users #1 to #5 is less than the candidate threshold value and they are regarded as neighborhood candidate users will be described. Furthermore, a case of selecting three people as the neighborhood will be described here.

The neighborhood candidate generation unit 14 excludes, from the neighborhood candidate users, the user #1 having the user vector same as that of the active user in the table 111. FIG. 9 illustrates that the user #1 is excluded by a strikethrough line. Next, the neighborhood-planned user extraction unit 151 extracts, as neighborhood-planned users, the top three people in the similarity from the users #2 to #5, who are the neighborhood candidate users. In this case, the neighborhood-planned user extraction unit 151 extracts the users #2, #3, and #4 as neighborhood-planned users. Next, the neighborhood operation degree calculation unit 152 calculates a neighborhood operation degree of each of the users #2, #3, and #4 who are the neighborhood-planned users. The summarization unit 153 has a neighborhood operation degree of 1.2 as a summarization threshold value here. Accordingly, as illustrated in FIG. 10, the summarization unit 153 summarizes the user #2 and the user #3 to generate one summarized user 123.

Next, since the number of the neighborhood-planned users is decreased by one, the neighborhood-planned user extraction unit 151 adds the user #5, who has the next highest degree of similarity in the neighborhood candidate users, to the neighborhood-planned users. As a result, the neighborhood candidate users become the users listed in the table 122. The neighborhood operation degree calculation unit 152 also calculates a neighborhood operation degree of the user #5. In this case, there is no neighborhood-planned user who exceeds the summarization threshold value other than the users #2 and #3 having already been subject to the summarization. Accordingly, the summarization unit 153 selects, as neighborhood users, the users #4 and #5 who are the neighborhood candidate users and the summarized user 123. The recommendation target determination unit 17 sets an item E or G as a recommended item using the item ratings of the users #4 and #5 and the summarized user 123. In this case, since all the items specified by the users #2 and #3 are included in the summarized user 123, the recommended items same as those in the case of not summarizing the users #2 and #3 are recommended. Therefore, it becomes possible to maintain the recommendation quality.

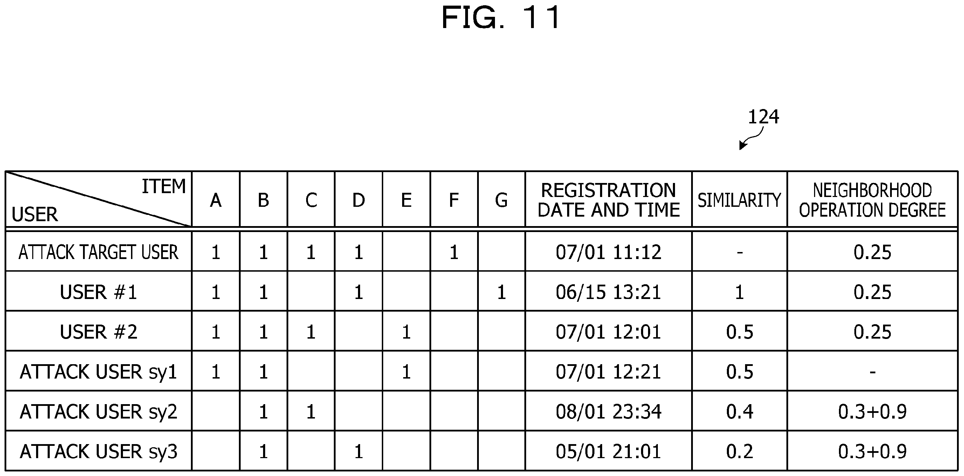

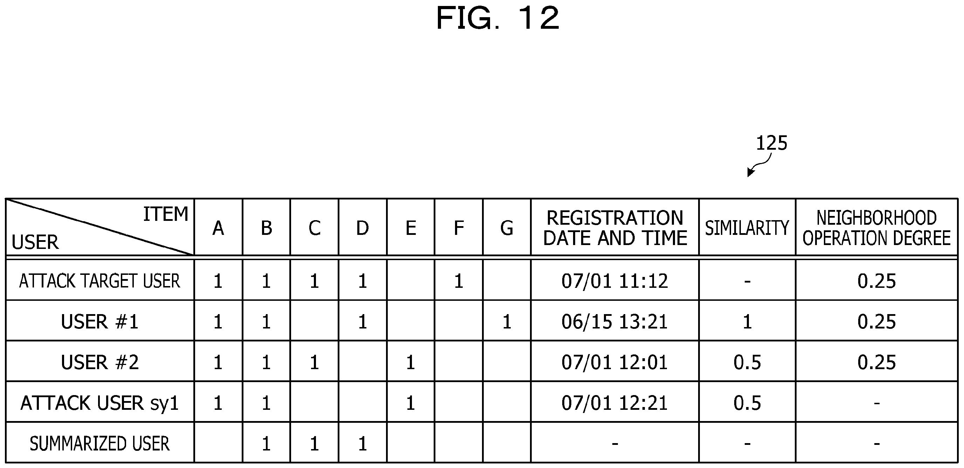

Next, a process of the recommender system 1 according to the present embodiment in the case of being attacked will be described with reference to FIGs. 11 and 12. FIG. 11 is a diagram illustrating exemplary neighborhood-planned users before summarization at the time of an attack. Furthermore, FIG. 12 is a diagram illustrating exemplary neighborhood-planned users in which summarization at the time of an attack is performed.

In a table 124, there are an attack target user, users #1 and #2, and attack users sy1 to sy3. The attack users sy1 to sy3 are users created by the attacker, and the attack user sy1 is an active user. In this case, since the attacker abundant known information associated with the attack target user, the attack users sy1 to sy3 are created with different user vectors. Here, a case where the similarity of the attack target user, the users #1 and #2, and the attack users sy2 and sy3 is less than the candidate threshold value and they are regarded as neighborhood candidate users will be described. Furthermore, a case of selecting three people as the neighborhood will be described here as well.

Since there is no user in the table 124 having a user vector same as that of the attack user sy1, who is an active user, the neighborhood candidate generation unit 14 does not exclude a recommendation candidate user, and sets all the users in the table 124 as recommendation candidate users. The neighborhood-planned user extraction unit 151 extracts, as neighborhood-planned users, the top three attack target users in the similarity to the attack user sy1 and the attack users sy2 and sy3. Next, the neighborhood operation degree calculation unit 152 calculates a neighborhood operation degree of each of the attack target users and the attack users sy2 and sy3, who are the neighborhood-planned users. The summarization unit 153 has a neighborhood operation degree of 1.2 as a summarization threshold value here. Accordingly, as illustrated in a table 125 in FIG. 12, the summarization unit 153 summarizes the user #2 and the user #3 to generate one summarized user.

Next, since the number of the neighborhood-planned users is decreased by one, the neighborhood-planned user extraction unit 151 adds the user #1 or #2, who has the next highest degree of similarity in the neighborhood candidate users, to the neighborhood-planned users. Here, the neighborhood-planned user extraction unit 151 adds the user #1 to the neighborhood-planned users. As a result, the neighborhood-planned users become the attack target user, the user #1, and the summarized user in the table 122. The neighborhood operation degree calculation unit 152 also calculates a neighborhood operation degree of the user #1. In this case, there is no neighborhood-planned user who exceeds the summarization threshold value other than the neighborhood-planned users already used to generate the summarized user. Accordingly, the summarization unit 153 selects the attack target user, the user #1, and the summarized user who are the neighborhood-planned users, as neighborhood users. Since the neighborhood includes the user #1 other than the attack target user and the attack user, it may not be said that it is an ideal neighborhood for the attacker. The recommendation target determination unit 17 sets an item C, D, F, or G as a recommended item using the item ratings of the attack target user, the user #1, and the summarized user. In this case, if the item C or D is recommended, it is known information for the attacker, and the attack will fail. Furthermore, if the item F or G is recommended, it is not possible for the attacker to determine whether or not the item is supported by the attack target user. Therefore, it becomes possible to defend the attack.

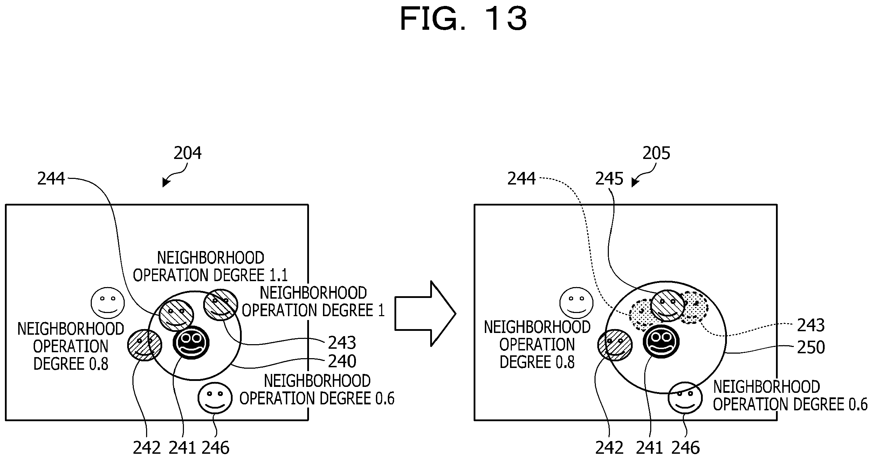

Moreover, an image of a defensive function of the recommender system 1 according to the second embodiment will be described with reference to FIG. 13. FIG. 13 is a diagram illustrating an outline of the defensive function of the recommender system according to the second embodiment. Here, a case of selecting three people as a neighborhood will be described.

For example, a state 204 represents a state in which an attack is being made and the general neighborhood creation is performed with an attack user 241 serving as an active user. In this case, a neighborhood 240 is created for the attack user 241. In this case, the neighborhood 240 includes an attack target user 242 in addition to attack users 243 to 245, and it can be said that the neighborhood 240 is an ideal neighborhood for the attacker. Therefore, the attacker is enabled to identify an unknown item supported by the attack target user 242.

Meanwhile, a state 205 represents a case where an attack is being made and a neighborhood is created by the recommender system 1 according to the present embodiment with the attack user 241 serving as an active user. In this case, the recommender system 1 summarizes the attack users 243 and 244 with the neighborhood operation degree equal to or higher than the summarization threshold value to make one summarized user 245. Then, the recommender system 1 creates a neighborhood 250 for the attack user 241. The neighborhood 250 includes a user 246 in addition to the attack target user 242, and thus the neighborhood 250 is not the ideal neighborhood for the attacker. As a result, it becomes difficult for the attacker to identify an unknown item supported by the attack target user 242.

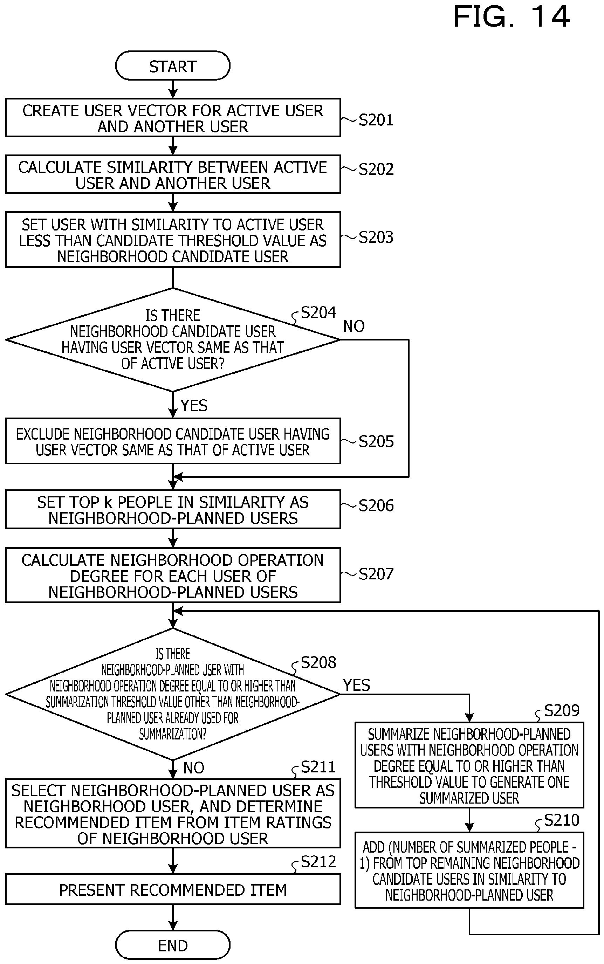

Next, a flow of the recommended item determination process by the recommender system 1 according to the present embodiment will be described with reference to FIG. 14. FIG. 14 is a flowchart of the recommended item determination process by the recommender system according to the second embodiment.

The data management unit 11 receives a rating result of each user using the terminal device 2, updates the item ratings as needed, and generates a rating matrix. The neighborhood candidate generation unit 14 receives a request for item recommendation directed to a specific user from the terminal device 2. Then, the neighborhood candidate generation unit 14 outputs, to the user vector creation unit 12, a creation instruction of a user vector together with information associated with the active user, who is the specific user. The user vector creation unit 12 obtains the rating matrix from the data management unit 11, and generates a user vector for each user (step S201).

The similarity calculation unit 13 obtains, from the user vector creation unit 12, information associated with the active user and the user vector of each user. Then, the similarity calculation unit 13 calculates similarity between the active user and another user using the user vectors of the active user and the another user (step S202). Thereafter, the similarity calculation unit 13 outputs the calculated similarity to the data management unit 11. The data management unit 11 adds the similarity of each user to the rating matrix.

The neighborhood candidate generation unit 14 obtains the rating matrix from the data management unit 11. Then, the neighborhood candidate generation unit 14 sets, as neighborhood candidate users, users with the similarity to the active user less than a candidate threshold value among the users registered in the rating matrix (step S203).

Next, the neighborhood candidate generation unit 14 determines whether or not there is a neighborhood candidate user having a user vector same as that of the active user (step S204). If there is no neighborhood candidate user having a user vector same as that of the active user (No in step S204), the recommended item determination process proceeds to step S206.

On the other hand, if there is a neighborhood candidate user having a user vector same as that of the active user (Yes in step S204), the neighborhood candidate generation unit 14 excludes the user having the user vector same as that of the active user from the neighborhood candidate users (step S205).

The neighborhood-planned user extraction unit 151 obtains information associated with the neighborhood candidate users from the neighborhood candidate generation unit 14. Then, the neighborhood-planned user extraction unit 151 extracts the top k people in the similarity as neighborhood-planned users (step S206).

The neighborhood operation degree calculation unit 152 obtains the information associated with the neighborhood-planned users from the neighborhood-planned user extraction unit 151. Then, the neighborhood operation degree calculation unit 152 obtains the rating matrix from the data management unit 11, and calculates a neighborhood operation degree of each user of the neighborhood-planned users (step S207).

Next, the summarization unit 153 determines whether or not there is a neighborhood-planned user with the neighborhood operation degree equal to or higher than the summarization threshold value other than the neighborhood user already used for summarization (step S208).

If there is a neighborhood-planned user with the neighborhood operation degree equal to or higher than the summarization threshold value other than the neighborhood user already used for the summarization (Yes in step S208), the summarization unit 153 summarizes the neighborhood-planned users with the neighborhood operation degree equal to or higher than the threshold value to generate one summarized user (step S209).

Next, the neighborhood-planned user extraction unit 151 extracts the number of people obtained by subtracting 1 from the number of summarized people from the remaining neighborhood candidate users other than the users already extracted as neighborhood-planned users with the top similarity, and adds them to the neighborhood-planned users (step S210). Thereafter, the recommended item determination process returns to step S208.

On the other hand, if there is no neighborhood-planned user with the neighborhood operation degree equal to or higher than the summarization threshold value other than the neighborhood users already used for the summarization (No in step S208), the summarization unit 153 selects the neighborhood-planned user at that time as a neighborhood user. The recommendation target determination unit 17 obtains information associated with the neighborhood candidate users from the neighborhood user selection unit 15. Then, the recommendation target determination unit 17 determines a recommended item from the item ratings of the neighborhood users (step S211).

The result notification unit 16 transmits the recommended item determined by the recommendation target determination unit 17 to the terminal device 2 to present the recommended item to a user (step S212).

As described above, the recommender system according to the present embodiment calculates a neighborhood operation degree, which is information indicating relevance to the active user, for each of the neighborhood-planned users, and summarizes the neighborhood-planned users with the neighborhood operation degree equal to or higher than the summarization threshold value into one person. Then, the recommender system generates a neighborhood using the summarized user, and determines a recommended item on the basis of the item ratings of the neighborhood users included in the neighborhood. As a result, also in a case where a plurality of attack users having different user vectors is created, it becomes possible to block creation of an ideal neighborhood for the attacker including no user other than the active user. Therefore, it becomes possible to defend against a kNN attack. Furthermore, even if the users are summarized, the items supported by the user after summarization correspond to the items supported by the user before the summarization, whereby it becomes possible to determine an appropriate recommended item. For example, it becomes possible to improve safety while maintaining recommendation quality.

Here, while the summarization unit 153 summarizes and reduces the neighborhood-planned users with the neighborhood operation degree equal to or higher than the threshold value in the present embodiment, the neighborhood-planned users with the neighborhood operation degree equal to or higher than the threshold value may be deleted to reduce the neighborhood-planned users with the neighborhood operation degree equal to or higher than the threshold value. Even in that case, it becomes possible to improve safety of the recommender system.

(Hardware Configuration)

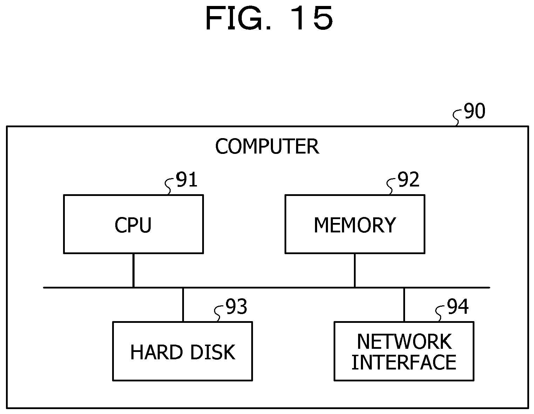

FIG. 15 is a hardware configuration diagram of the recommender system. Here, an exemplary case of implementing the recommender system by one computer will be described. The recommender system 1 described in each of the embodiments above may be implemented by a computer 90, for example. The computer 90 includes a central processing unit (CPU) 91, a memory 92, a hard disk 93, and a network interface 94. The CPU 91 is connected to the memory 92, the hard disk 93, and the network interface 94 via a bus.

The network interface 94 is a communication interface for connecting to the terminal device 2 and the Internet for communication. The network interface 94 controls communication between the CPU 91 and an external device.

The hard disk 93 is an auxiliary storage device. The hard disk 93 constitutes a storage device included in the data management unit 11. Furthermore, the hard disk 93 stores various programs. For example, the hard disk 93 stores programs for implementing functions of the data management unit 11, the user vector creation unit 12, the similarity calculation unit 13, the neighborhood candidate generation unit 14, the neighborhood user selection unit 15, the result notification unit 16, and the recommendation target determination unit 17 exemplified in FIGs. 1 and 8.

The CPU 91 reads out the various programs from the hard disk 93, and loads them in the memory 92 to execute them. As a result, the CPU 91 and the memory 92 implement the functions of the data management unit 11, the user vector creation unit 12, the similarity calculation unit 13, the neighborhood candidate generation unit 14, the neighborhood user selection unit 15, the result notification unit 16, and the recommendation target determination unit 17 exemplified in FIGs. 1 and 8.

**Claims**

1. An information processing program that causes at least one computer to execute a process, the process comprising:

   acquiring ratings for a plurality of objects by each of a plurality of users;
   generating a user vector that represents a rating state of each of the users based on the ratings for the plurality of objects;
   generating neighborhood candidate users by excluding a user that has a user vector same as a user vector of a certain user from the plurality of users;

selecting a certain number of neighborhood users from the neighborhood candidate users based on similarity of the user vector; and

determining a recommended object based on the ratings of each of the neighborhood users.

2. The information processing program according to claim 1, wherein the process further comprising:

extracting a top certain number of neighborhood-planned users in similarity of the user vector to the specific user from the neighborhood candidate users;

obtaining a neighborhood operation degree that indicates a relationship with the specific user for each of the neighborhood-planned users;

reducing the neighborhood-planned users with the neighborhood operation degree equal to or higher than a threshold value;

extracting a number of the users that corresponds to the number of reduced users from the neighborhood candidate users excluded the neighborhood-planned users based on the similarity, by adding the users to the neighborhood candidate users to be a certain number; and

repeating the reducing and the extracting until a number of the neighborhood-planned users with the neighborhood operation degree equal to or higher than the threshold value is less than a certain number.

3. The information processing program according to claim 2, wherein the process further comprising excluding a user with the neighborhood operation degree equal to or higher than the threshold value from the neighborhood-planned users.

4. The information processing program according to claim 2, wherein the process further comprising when the number of the neighborhood candidate users with the neighborhood operation degree equal to or higher than the threshold value is a certain number or more, summarizing the neighborhood candidate users with the neighborhood operation degree equal to or higher than the threshold value among the plurality of users into one.

5. An information processing method for a computer to execute a process comprising:

acquiring ratings for a plurality of objects by each of a plurality of users;

generating a user vector that represents a rating state of each of the users based on the ratings for the plurality of objects;

generating neighborhood candidate users by excluding a user that has a user vector same as a user vector of a certain user from the plurality of users;

selecting a certain number of neighborhood users from the neighborhood candidate users based on similarity of the user vector; and

determining a recommended object based on the ratings of each of the neighborhood users.

6. The information processing method according to claim 5, wherein the process further comprising:

extracting a top certain number of neighborhood-planned users in similarity of the user vector to the specific user from the neighborhood candidate users;

obtaining a neighborhood operation degree that indicates a relationship with the specific user for each of the neighborhood-planned users;

reducing the neighborhood-planned users with the neighborhood operation degree equal to or higher than a threshold value;

extracting a number of the users that corresponds to the number of reduced users from the neighborhood candidate users excluded the neighborhood-planned users based on the similarity, by adding the users to the neighborhood candidate users to be a certain number; and

repeating the reducing and the extracting until a number of the neighborhood-planned users with the neighborhood operation degree equal to or higher than the threshold value is less than a certain number.

7. The information processing method according to claim 6, wherein the process further comprising excluding a user with the neighborhood operation degree equal to or higher than the threshold value from the neighborhood-planned users.

8. The information processing method according to claim 6, wherein the process further comprising when the number of the neighborhood candidate users with the neighborhood operation degree equal to or higher than the threshold value is a certain number or more, summarizing the neighborhood candidate users with the neighborhood operation degree equal to or higher than the threshold value among the plurality of users into one.

9. An information processing device comprising:

a data management unit that acquires ratings for a plurality of objects by each of a plurality of users;

a user vector creation unit that generates a user vector that represents a rating state of each of the users based on the ratings for the plurality of objects;

a neighborhood candidate generation unit that generates neighborhood candidate users by excluding a user that has a user vector same as a user vector of a certain user from the plurality of users;

a neighborhood user selection unit that selects a certain number of neighborhood users from the neighborhood candidate users based on similarity of the user vector; and

a recommendation target determination unit that determines a recommended object based on the ratings of each of the neighborhood users.

# FIG. 1

RECOMMENDER SYSTEM — 1

TERMINAL DEVICE — 2

DATA MANAGEMENT UNIT — 11

USER VECTOR CREATION UNIT — 12

SIMILARITY CALCULATION UNIT — 13

NEIGHBORHOOD CANDIDATE GENERATION UNIT — 14

NEIGHBORHOOD USER SELECTION UNIT — 15

RESULT NOTIFICATION UNIT — 16

RECOMMENDATION TARGET DETERMINATION UNIT — 17

EP 4 024 316 A1

EP 4 024 316 A1

# FIG. 2

15

# FIG. 3

111

| ITEM / USER | A | B | C | D | E | F | G | REGISTRATION DATE AND TIME | SIMILARITY |
|---|---|---|---|---|---|---|---|---|---|
| ACTIVE USER | 1 | 1 | 1 | 1 | | 1 | | 07/01 11:12 | - |
| ~~USER #1~~ | ~~1~~ | ~~1~~ | ~~1~~ | ~~1~~ | | ~~1~~ | | ~~06/15 13:21~~ | ~~1~~ |
| USER #2 | 1 | 1 | | 1 | | | 1 | 07/01 12:01 | 0.5 |
| USER #3 | 1 | 1 | 1 | | 1 | | | 07/01 12:21 | 0.5 |
| USER #4 | 1 | 1 | | | | | | 08/01 23:34 | 0.4 |
| USER #5 | 1 | 1 | | | | | | 05/01 21:01 | 0.2 |

EP 4 024 316 A1

# FIG. 4

112

| ITEM / USER | A | B | C | D | REGISTRATION DATE AND TIME | SIMILARITY |
|---|---|---|---|---|---|---|
| ATTACK TARGET USER | 1 | 1 | | | 07/01 11:12 | - |
| USER #1 | 1 | | | 1 | 06/15 13:21 | 0.5 |
| USER #2 | 1 | | 1 | | 07/01 12:01 | 0.5 |
| ATTACK USER sy1 | 1 | | | | 07/01 12:21 | 0.3 |
| ~~ATTACK USER sy2~~ | ~~1~~ | | | | ~~08/01 23:34~~ | ~~0.3~~ |
| ~~ATTACK USER sy3~~ | ~~1~~ | | | | ~~05/01 21:01~~ | ~~0.3~~ |

# FIG. 5

EP 4 024 316 A1

113

| ITEM / USER | A | B | C | D | E | REGISTRATION DATE AND TIME | SIMILARITY | NEIGHBORHOOD OPERATION DEGREE |
|---|---|---|---|---|---|---|---|---|
| ATTACK TARGET USER | 1 | 1 | 1 | | | 07/01 11:12 | - | 0.3+0 |
| USER #1 | 1 | 1 | | 1 | | 06/15 13:21 | 0.5 | 0.3+0 |
| USER #2 | 1 | 1 | | | 1 | 07/01 12:01 | 0.5 | 0.3+0 |
| ATTACK USER sy1 | 1 | | | | | 07/01 12:21 | 0.3 | - |
| ATTACK USER sy2 | | 1 | | | | 08/01 23:34 | 0.3 | - |
| ATTACK USER sy3 | | 1 | | | | 05/01 21:01 | 0.3 | - |

# FIG. 6

EP 4 024 316 A1

# FIG. 7

START

S101
CREATE USER VECTOR FOR ACTIVE USER AND ANOTHER USER

S102
CALCULATE SIMILARITY BETWEEN ACTIVE USER AND ANOTHER USER

S103
SET USER WITH SIMILARITY TO ACTIVE USER LESS THAN CANDIDATE THRESHOLD VALUE AS NEIGHBORHOOD CANDIDATE USER

S104
IS THERE NEIGHBORHOOD CANDIDATE USER HAVING USER VECTOR SAME AS THAT OF ACTIVE USER?

NO

YES

S105
EXCLUDE USER HAVING USER VECTOR SAME AS THAT OF ACTIVE USER

S106
SELECT NEIGHBORHOOD USER WITH TOP k PEOPLE IN SIMILARITY AS NEIGHBORHOOD

S107
DETERMINE RECOMMENDED ITEM FROM ITEM RATINGS OF NEIGHBORHOOD USER

S108
PRESENT RECOMMENDED ITEM

END

# FIG. 8

RECOMMENDER SYSTEM — 1

TERMINAL DEVICE — 2

DATA MANAGEMENT UNIT — 11

USER VECTOR CREATION UNIT — 12

SIMILARITY CALCULATION UNIT — 13

NEIGHBORHOOD CANDIDATE GENERATION UNIT — 14

NEIGHBORHOOD USER SELECTION UNIT — 15

NEIGHBORHOOD-PLANNED USER EXTRACTION UNIT — 151

NEIGHBORHOOD OPERATION DEGREE CALCULATION UNIT — 152

SUMMARIZATION UNIT — 153

RESULT NOTIFICATION UNIT — 16

RECOMMENDATION TARGET DETERMINATION UNIT — 17

# FIG. 9

121

| ITEM<br>USER | A | B | C | D | E | F | G | REGISTRATION<br>DATE AND TIME | SIMILARITY | NEIGHBORHOOD<br>OPERATION DEGREE |
|---|---|---|---|---|---|---|---|---|---|---|
| ACTIVE USER | 1 | 1 | 1 | 1 | | 1 | | 07/01 11:12 | – | – |
| ~~USER #1~~ | ~~1~~ | ~~1~~ | ~~1~~ | ~~1~~ | | ~~1~~ | | ~~06/15 13:21~~ | ~~1~~ | ~~–~~ |
| USER #2 | 1 | 1 | | 1 | | | 1 | 07/01 12:01 | 0.5 | 0.5+0.9 |
| USER #3 | 1 | 1 | 1 | | 1 | | | 07/01 12:21 | 0.5 | 0.5+0.9 |
| USER #4 | 1 | 1 | | | | | | 08/01 23:34 | 0.4 | 0.4+0 |
| USER #5 | 1 | 1 | | | | | | 05/01 21:01 | 0.2 | – |

# FIG. 10

EP 4 024 316 A1

122

| ITEM / USER | A | B | C | D | E | F | G | REGISTRATION DATE AND TIME | SIMILARITY | NEIGHBORHOOD OPERATION DEGREE |
|---|---|---|---|---|---|---|---|---|---|---|
| ACTIVE USER | 1 | 1 | 1 | 1 | | 1 | | 07/01 11:12 | - | - |
| USER #4 | 1 | 1 | | | | | | 08/01 23:34 | 0.4 | 0.4+0 |
| USER #5 | 1 | 1 | | | | | | 05/01 21:01 | 0.2 | - |
| SUMMARIZED USER | 1 | 1 | 1 | 1 | 1 | | 1 | - | - | - |

123 ⇧

| | A | B | C | D | E | F | G | REGISTRATION DATE AND TIME | SIMILARITY | NEIGHBORHOOD OPERATION DEGREE |
|---|---|---|---|---|---|---|---|---|---|---|
| USER #2 | 1 | 1 | | 1 | | | 1 | 07/01 12:01 | 0.5 | 0.5+0.9 |
| USER #3 | 1 | 1 | 1 | | 1 | | | 07/01 12:21 | 0.5 | 0.5+0.9 |

## FIG. 11

124

| ITEM / USER | A | B | C | D | E | F | G | REGISTRATION DATE AND TIME | SIMILARITY | NEIGHBORHOOD OPERATION DEGREE |
|---|---|---|---|---|---|---|---|---|---|---|
| ATTACK TARGET USER | 1 | 1 | 1 | 1 | | 1 | | 07/01 11:12 | - | 0.25 |
| USER #1 | 1 | 1 | | 1 | | | 1 | 06/15 13:21 | 1 | 0.25 |
| USER #2 | 1 | 1 | 1 | | 1 | | | 07/01 12:01 | 0.5 | 0.25 |
| ATTACK USER sy1 | 1 | 1 | | | 1 | | | 07/01 12:21 | 0.5 | - |
| ATTACK USER sy2 | | 1 | 1 | | | | | 08/01 23:34 | 0.4 | 0.3+0.9 |
| ATTACK USER sy3 | | 1 | | 1 | | | | 05/01 21:01 | 0.2 | 0.3+0.9 |

EP 4 024 316 A1

# FIG. 12

125

| ITEM / USER | A | B | C | D | E | F | G | REGISTRATION DATE AND TIME | SIMILARITY | NEIGHBORHOOD OPERATION DEGREE |
|---|---|---|---|---|---|---|---|---|---|---|
| ATTACK TARGET USER | 1 | 1 | 1 | 1 |  | 1 |  | 07/01 11:12 | - | 0.25 |
| USER #1 | 1 | 1 |  | 1 |  |  | 1 | 06/15 13:21 | 1 | 0.25 |
| USER #2 | 1 | 1 | 1 |  | 1 |  |  | 07/01 12:01 | 0.5 | 0.25 |
| ATTACK USER sy1 | 1 | 1 |  |  | 1 |  |  | 07/01 12:21 | 0.5 | - |
| SUMMARIZED USER |  | 1 | 1 | 1 |  |  |  | - | - | - |

# FIG. 13

# FIG. 14

```
                    ( START )
                        │
                        ▼
        ┌──────────────────────────────────┐
        │ CREATE USER VECTOR FOR ACTIVE USER │─── S201
        │      AND ANOTHER USER              │
        └──────────────────────────────────┘
                        │
                        ▼
        ┌──────────────────────────────────┐
        │ CALCULATE SIMILARITY BETWEEN ACTIVE│─── S202
        │      USER AND ANOTHER USER         │
        └──────────────────────────────────┘
                        │
                        ▼
        ┌──────────────────────────────────┐
        │ SET USER WITH SIMILARITY TO ACTIVE USER│─── S203
        │ LESS THAN CANDIDATE THRESHOLD VALUE AS │
        │     NEIGHBORHOOD CANDIDATE USER    │
        └──────────────────────────────────┘
                        │
                        ▼
                  ◇ IS THERE              ◇ S204
                 NEIGHBORHOOD CANDIDATE USER    NO
                 HAVING USER VECTOR SAME AS THAT ────────┐
                      OF ACTIVE USER?                    │
                        │ YES                            │
                        ▼                                │
        ┌──────────────────────────────────┐            │
        │ EXCLUDE NEIGHBORHOOD CANDIDATE USER HAVING│─── S205 │
        │ USER VECTOR SAME AS THAT OF ACTIVE USER   │        │
        └──────────────────────────────────┘            │
                        │◄───────────────────────────────┘
                        ▼
        ┌──────────────────────────────────┐
        │ SET TOP k PEOPLE IN SIMILARITY AS │─── S206
        │   NEIGHBORHOOD-PLANNED USERS      │
        └──────────────────────────────────┘
                        │
                        ▼
        ┌──────────────────────────────────┐
        │ CALCULATE NEIGHBORHOOD OPERATION  │─── S207
        │      DEGREE FOR EACH USER OF       │
        │    NEIGHBORHOOD-PLANNED USERS      │
        └──────────────────────────────────┘
                        │◄──────────────────────────────────────┐
                        ▼                                        │
                 ◇ IS THERE                    ◇ S208           │
                 NEIGHBORHOOD-PLANNED USER WITH                  │
            NEIGHBORHOOD OPERATION DEGREE EQUAL TO OR HIGHER THAN │
            SUMMARIZATION THRESHOLD VALUE OTHER THAN NEIGHBORHOOD-│ YES
            PLANNED USER ALREADY USED FOR                        │
                 SUMMARIZATION?  ──────────────────────────────┐ │
                        │ NO            ◇ S211                  ▼ │
                        ▼                   ┌──────────────────────────┐
        ┌──────────────────────────────────┐│ SUMMARIZE NEIGHBORHOOD-PLANNED│── S209
        │ SELECT NEIGHBORHOOD-PLANNED USER AS││ USERS WITH NEIGHBORHOOD OPERATION│
        │ NEIGHBORHOOD USER, AND DETERMINE   ││ DEGREE EQUAL TO OR HIGHER THAN│
        │ RECOMMENDED ITEM FROM ITEM RATINGS ││ THRESHOLD VALUE TO GENERATE ONE│
        │    OF NEIGHBORHOOD USER            ││     SUMMARIZED USER       │
        └──────────────────────────────────┘└──────────────────────────┘
                        │         S212              │
                        ▼                           ▼  S210
        ┌──────────────────────────────────┐  ┌──────────────────────────┐
        │   PRESENT RECOMMENDED ITEM        │  │ ADD (NUMBER OF SUMMARIZED PEOPLE -│
        └──────────────────────────────────┘  │ 1) FROM TOP REMAINING NEIGHBORHOOD│
                        │                       │ CANDIDATE USERS IN SIMILARITY TO │
                        ▼                       │   NEIGHBORHOOD-PLANNED USER      │
                    ( END )                     └──────────────────────────┘
```

# FIG. 15

COMPUTER 90

CPU 91

MEMORY 92

HARD DISK 93

NETWORK INTERFACE 94

Europäisches
Patentamt

European
Patent Office

Office européen
des brevets

# EUROPEAN SEARCH REPORT

Application Number

EP 21 20 7725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XUE-FENG SU ET AL: "Finding group shilling in recommendation system", INTERNATIONAL WORLD WIDE WEB CONFERENCE, XX, XX, 10 May 2005 (2005-05-10), pages 960-961, XP058405712, DOI: 10.1145/1062745.1062818 ISBN: 978-1-59593-051-4 * abstract * * page 960 – page 961 * | 1-9 | INV. G06Q30/06 |
| A | YUAN DONG YUAND15@MAILS TSINGHUA EDU CN ET AL: "Detecting Fake Accounts in Online Social Networks at the Time of Registrations", DESIGNING INTERACTIVE SYSTEMS CONFERENCE, ACM, 2 PENN PLAZA, SUITE 701NEW YORKNY10121-0701USA, 6 November 2019 (2019-11-06), pages 1423-1438, XP058637829, DOI: 10.1145/3319535.3363198 ISBN: 978-1-4503-5850-7 * abstract * * page 1424 – page 1430 * | 1-9 | |
| A | WEI RUOXUAN ET AL: "An Improved Collaborative Filtering Recommendation Algorithm against Shilling Attacks", 2016 17TH INTERNATIONAL CONFERENCE ON PARALLEL AND DISTRIBUTED COMPUTING, APPLICATIONS AND TECHNOLOGIES (PDCAT), IEEE, 16 December 2016 (2016-12-16), pages 330-335, XP033105132, DOI: 10.1109/PDCAT.2016.077 [retrieved on 2017-06-07] * the whole document * | 1-9 | |

TECHNICAL FIELDS SEARCHED (IPC)

G06Q

The present search report has been drawn up for all claims

| Place of search | Date of completion of the search | Examiner |
|---|---|---|
| The Hague | 12 April 2022 | Bohner, Michael |

EPO FORM 1503 03.82 (P04C01)

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017027480 A

**Non-patent literature cited in the description**

- **LU ZHIGANG ; SHEN HONG.** A security-assured accuracy-maximized privacy preserving collaborative filtering recommendation algorithm. *Proceedings of the 19th International Database Engineering & Applications Symposium,* 2015

- **BOUTET ANTOINE et al.** Collaborative Filtering Under a Sybil Attack: Similarity Metrics do Matter!. *48th AnnualIEEE/IFIP International Conference on Dependable Systems and Networks (DSN),* 2018